# FASCICULE DE BREVET EUROPEEN

(11) **EP 3 747 717 B1**
(45) Date de publication et mention de la délivrance du brevet: **16.02.2022**
(21) Numéro de dépôt: 20177872.7
(22) Date de dépôt: 02.06.2020
(51) Int. Cl.: B60T 13/74

(54) **DETECTION DE L'ETAT D'UN ORGANE DE FREINAGE DE PARC**
ERKENNUNG DES ZUSTANDS EINER FESTSTELLBREMSE
DETECTION OF THE STATE OF A PARKING BRAKE UNIT

(30) Priorité: 03.06.2019 FR 1905845
(43) Date de publication de la demande: 09.12.2020
(73) Titulaire: Safran Landing Systems, 78140 Vélizy-Villacoublay (FR)
(72) Inventeur: GOYEZ, Brian, 77550 MOISSY-CRAMAYEL (FR); DURAND, Guillaume, 77550 MOISSY-CRAMAYEL (FR); CLAIRARDIN, Eric, 77550 MOISSY-CRAMAYEL (FR)
(74) Mandataire: Lavaud, Thomas

(56) Documents cités:
- EP-A1- 2 944 521
- FR-A1- 2 947 599
- FR-B1- 3 053 522

## Description

L'invention concerne le domaine des organes de freinage de parc bistables.

### ARRIERE PLAN DE L'INVENTION

Un aéronef moderne, tel qu'un avion ou un hélicoptère, comporte classiquement un système de freinage de roues dites « freinées » de l'aéronef. Le système de freinage comporte une pluralité de freins destinés chacun à freiner l'une des roues freinées de l'aéronef. Chaque frein comporte un ou des organes de friction, par exemple une pile de disques de carbone, et un ou plusieurs actionneurs de freinage. Les actionneurs de freinage sont généralement des actionneurs électromécaniques, auquel cas on parle d'un « système de freinage électrique », ou des actionneurs hydrauliques, auquel cas on parle d'un « système de freinage hydraulique ».

Dans un système de freinage électrique, chaque actionneur électromécanique de freinage comprend un moteur électrique et un ensemble vis/écrou dont l'un des éléments est entraîné en rotation par le moteur électrique et l'autre élément est astreint à coulisser sans rotation pour exercer sélectivement un effort de presse sur les organes de friction.

Pour assurer l'immobilisation de l'aéronef au parking, il est nécessaire de maintenir l'effort de presse alors même que le moteur électrique de l'actionneur électromécanique de freinage n'est pas alimenté.

On munit donc l'actionneur électromécanique de freinage d'un organe de freinage de parc.

Les organes de freinage de parc habituellement utilisés peuvent être classés dans deux familles : les organes de freinage de parc monostables et les organes de freinage de parc bistables.

Un organe de freinage de parc monostable est aussi appelé « frein à manque de courant ». Le frein à manque de courant libère l'arbre du moteur électrique lorsqu'il est alimenté par un courant, et le verrouille lorsque le courant ne circule plus.

Dans un organe de freinage de parc bistable, une impulsion de courant permet de bloquer l'arbre du moteur électrique, et une impulsion inverse le libère.

Les organes de freinage de parc bistables présentent l'avantage - entre autres - de consommer moins d'énergie électrique.

On s'intéresse dans ce document aux organes de freinage de parc bistables.

Un organe de freinage de parc bistable comporte un électro-aimant linéaire bistable qui comprend au moins une bobine et une navette montée coulissante entre deux positions extrémales qui correspondent chacune à l'un des états bloqué ou déverrouillé de l'organe de freinage de parc bistable.

Les logiques mises en œuvre dans les logiciels du système de freinage électrique, qui intègre l'organe de freinage de parc bistable, requièrent de connaître l'état réel de l'organe de freinage de parc et donc la position réelle de la navette de l'électro-aimant linéaire bistable. L'état réel de l'organe de freinage de parc peut en effet être différent de l'état commandé, en particulier lorsque l'organe de freinage de parc subit une défaillance qui a pour conséquence de bloquer la navette dans une position quelconque.

Le brevet FR 3 053 522 B1 décrit un électro-aimant linéaire bistable comprenant un corps creux, une bobine et une navette montée coulissante dans le corps creux sous l'effet d'un champ magnétique généré par la bobine. Un capteur de champ magnétique est positionné dans une cavité d'une paroi du corps creux, et est destiné à mesurer un flux magnétique pour déterminer la position de la navette.

L'utilisation de ce capteur magnétique présente des avantages incontestables, mais aussi un certain coût, et tend à augmenter la masse et le volume et à réduire (au moins théoriquement) la fiabilité de l'organe de freinage de parc.

### OBJET DE L'INVENTION

L'invention a pour objet de détecter l'état bloqué ou déverrouillé d'un organe de freinage de parc bistable d'un frein d'une roue d'aéronef, sans augmenter la masse et le volume et sans réduire la fiabilité de l'organe de freinage de parc bistable.

### RESUME DE L'INVENTION

En vue de la réalisation de ce but, on propose un procédé de détection d'un état bloqué ou déverrouillé d'un organe de freinage de parc d'un frein d'une roue d'aéronef, l'organe de freinage de parc comportant un électro-aimant linéaire bistable qui comprend un tore ferromagnétique, une bobine, un aimant permanent et une navette reliée à une tige, la navette étant montée coulissante dans le tore ferromagnétique entre deux positions extrémales situées de part et d'autre de l'aimant permanent et correspondant à une position étendue et à une position rétractée de la tige, l'organe de freinage de parc étant relié à un composant d'alimentation agencé pour générer une tension de commande aux bornes de la bobine de sorte qu'un courant de commande circule dans la bobine et génère un champ magnétique de commande qui déplace la navette entre les deux positions extrémales, et à un capteur de courant agencé pour mesurer le courant de commande, le procédé de détection comprenant les étapes de :
- piloter le composant d'alimentation pour générer une tension de test aux bornes de la bobine et donc un courant de test circulant dans la bobine, la tension de test ayant une amplitude inférieure à un seuil de tension prédéterminé de sorte qu'un champ magnétique de test généré par le courant de test ne déplace pas la navette ;
- acquérir des mesures du courant de test produites par le capteur de courant ;
- analyser les mesures du courant de test et détecter l'état bloqué ou déverrouillé de l'organe de freinage de parc à partir de cette analyse.

Le procédé de détection selon l'invention est appliqué à un organe de freinage de parc bistable comprenant un électro-aimant linéaire bistable et relié à un composant d'alimentation qui génère la tension de commande et à un capteur de courant qui mesure le courant de commande.

Le procédé de détection est donc mis en œuvre en utilisant le composant d'alimentation et le capteur de courant utilisés pour la commande de l'organe de freinage de parc bistable, et donc sans ajouter de composant « matériel » supplémentaire, tel qu'un capteur par exemple. La mise en œuvre du procédé de détection ne réduit donc pas la fiabilité et n'augmente pas le volume, la masse et le coût de l'organe de freinage de parc.

On propose de plus un procédé de détection tel que celui qui vient d'être décrit, dans lequel la tension de test comprend un échelon de tension et dans lequel l'analyse des mesures du courant de test comprend l'étape de comparer une amplitude du courant de test avec un premier seuil de courant prédéterminé.

On propose de plus un procédé de détection tel que celui qui vient d'être décrit, dans lequel l'analyse des mesures du courant de test est une analyse fréquentielle.

On propose de plus un procédé de détection tel que celui qui vient d'être décrit, dans lequel l'analyse fréquentielle comprend l'étape de comparer une amplitude d'au moins une harmonique du courant de test avec un deuxième seuil de courant prédéterminé.

On propose aussi un système de freinage de parc comportant un organe de freinage de parc, un composant d'alimentation, un capteur de courant et un composant de traitement, l'organe de freinage de parc comprenant un électro-aimant linéaire bistable qui comporte un tore ferromagnétique, une bobine, un aimant permanent et une navette reliée à une tige, la navette étant montée coulissante dans le tore ferromagnétique entre deux positions extrémales situées de part et d'autre de l'aimant permanent et correspondant à une position étendue et à une position rétractée de la tige, l'organe de freinage de parc étant relié au composant d'alimentation qui est agencé pour générer une tension de commande aux bornes de la bobine de sorte qu'un courant de commande circule dans la bobine et génère un champ magnétique de commande qui déplace la navette entre les deux positions extrémales, et au capteur de courant qui est agencé pour mesurer le courant de commande, le procédé de détection qui vient d'être décrit étant mis en œuvre dans le composant de traitement.

On propose de plus un système de freinage de parc tel que celui qui vient d'être décrit, dans lequel la tige présente une première forme asymétrique par rapport à un premier plan médian de la tige, qui est orthogonal à une direction de coulissement de la tige, de manière à accentuer une asymétrie magnétique entre un premier circuit magnétique correspondant à la tige en position rétractée et un deuxième circuit magnétique correspondant à la tige en position étendue.

On propose de plus un système de freinage de parc tel que celui qui vient d'être décrit, dans lequel le tore ferromagnétique présente une deuxième forme asymétrique par rapport à un deuxième plan médian du tore ferromagnétique, qui est orthogonal à une direction de coulissement de la tige, de manière à accentuer une asymétrie magnétique entre un premier circuit magnétique correspondant à la tige en position rétractée et un deuxième circuit magnétique correspondant à la tige en position étendue.

On propose de plus un système de freinage de parc tel que celui qui vient d'être décrit, dans lequel la bobine est enroulée sur le tore ferromagnétique selon un agencement asymétrique par rapport à un troisième plan médian du tore ferromagnétique, qui est orthogonal à une direction de coulissement de la tige, de manière à accentuer une asymétrie magnétique entre un premier circuit magnétique correspondant à la tige en position rétractée et un deuxième circuit magnétique correspondant à la tige en position étendue.

On propose de plus un actionneur électromécanique comprenant un carter et un système de freinage de parc tel que celui qui vient d'être décrit, le système de freinage de parc étant intégré dans le carter.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés, parmi lesquels :
- la figure 1 représente un électro-aimant linéaire bistable selon un premier mode de réalisation d'un organe de freinage de parc qui est dans un état déverrouillé ;
- la figure 2 représente l'électro-aimant linéaire bistable de l'organe de freinage de parc qui est dans un état bloqué ;
- la figure 3 représente l'électro-aimant linéaire bistable alors que l'organe de freinage de parc passe de l'état bloqué à l'état déverrouillé ;
- la figure 4 représente l'électro-aimant linéaire bistable alors que l'organe de freinage de parc passe de l'état déverrouillé à l'état bloqué ;
- la figure 5 représente un composant d'alimentation, un capteur de courant et un composant de traitement qui sont reliés à l'organe de freinage de parc ;
- la figure 6 est un graphique sur lequel sont représentées une courbe d'une tension de test, une courbe d'un courant de test correspondant à l'état déverrouillé de l'organe de freinage de parc, et une courbe du courant de test correspondant à l'état bloqué de l'organe de freinage de parc ;
- la figure 7 représente un électro-aimant linéaire bistable selon un deuxième mode de réalisation d'un organe de freinage de parc qui est dans un état bloqué ;
- la figure 8 représente un électro-aimant linéaire bistable selon un troisième mode de réalisation d'un organe de freinage de parc qui est dans un état bloqué ;
- la figure 9 représente un électro-aimant linéaire bistable selon un quatrième mode de réalisation d'un organe de freinage de parc qui est dans un état bloqué.

### DESCRIPTION DETAILLEE DE L'INVENTION

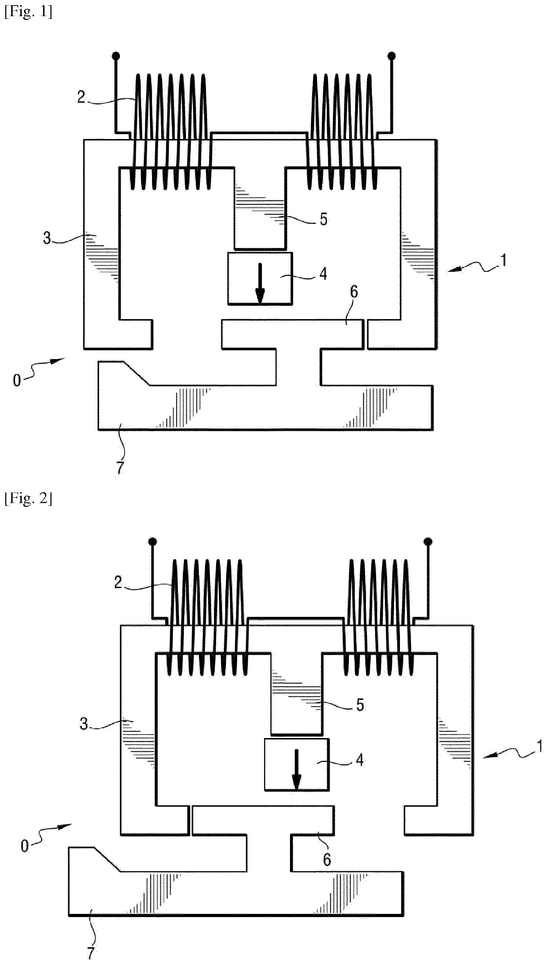

En référence aux figures 1 et 2, un actionneur électromécanique de freinage d'un frein d'une roue d'aéronef comporte un moteur électrique et un organe de freinage de parc 0 comprenant un électro-aimant linéaire bistable selon un premier mode de réalisation 1. L'électro-aimant linéaire bistable 1 comporte une bobine 2, un tore ferromagnétique 3 en forme de « E », un aimant permanent 4 fixé à une extrémité de la branche centrale 5 du « E », et une navette 6 mobile et liée à une tige 7. La tige 7 coopère avec un crabot relié à un arbre de sortie du moteur électrique de l'actionneur électromécanique de freinage.

La tige 7 coulisse entre une position rétractée, visible sur la figure 1, dans laquelle l'organe de freinage de parc 0 se trouve dans un état déverrouillé et dans laquelle l'arbre de sortie du moteur électrique est libéré, et une position étendue, visible sur la figure 2, dans laquelle l'organe de freinage de parc 0 se trouve dans un état bloqué et dans laquelle l'arbre de sortie du moteur électrique est bloqué.

La tige 7 est entraînée par la navette 6 qui est montée coulissante dans le tore 3 entre une première position extrémale, correspondant à la position rétractée de la tige 7, et une deuxième position extrémale, correspondant à la position étendue de la tige 7. Par « dans le tore 3 », on entend ici qu'au moins une portion de la navette 6 est située à l'intérieur d'un volume défini par l'enveloppe externe du tore 3.

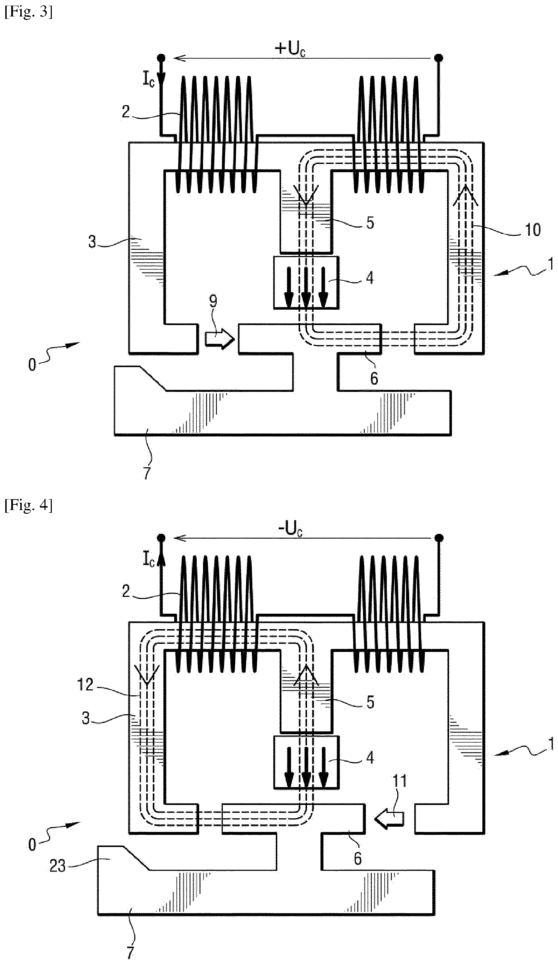

En référence à la figure 3, lorsque l'organe de freinage de parc 0 se trouve dans l'état bloqué et qu'il convient de le faire passer dans l'état déverrouillé, on applique une tension de commande +U_{c} aux bornes de la bobine 2. La tension de commande +U_{c} est ici une tension continue appliquée de manière impulsionnelle. Un courant de commande continu I_{c} circule alors dans la bobine 2 et génère un champ magnétique de commande dans le tore 3 qui attire la navette 6 vers sa première position extrémale : la navette 6 se déplace dans le sens de la flèche 9.

Un flux magnétique, résultant du champ magnétique de commande, est généré dans le tore 3. Le flux magnétique est symbolisé par les lignes de champ 10.

Lorsque la navette 6 se trouve dans la première position extrémale et que la tige 7 se trouve dans la position rétractée, l'organe de freinage de parc 0 se trouve dans l'état déverrouillé. Une fois la navette 6 déplacée, il n'est plus nécessaire d'alimenter l'organe de freinage de parc 0 car l'aimant permanent 4 va maintenir un champ magnétique immobilisant la navette 6.

En référence à la figure 4, lorsque l'organe de freinage de parc 0 se trouve dans l'état déverrouillé et qu'il convient de le passer dans l'état bloqué, on applique une tension de commande -U_{c} aux bornes de la bobine 2. La tension de commande -U_{c} est appliquée de manière impulsionnelle. Un courant de commande I_{c} de sens opposé à celui de la figure 3 circule alors dans la bobine 2 et génère un champ magnétique de commande dans le tore 3 qui attire la navette 6 vers sa deuxième position extrémale : la navette 6 se déplace dans le sens de la flèche 11.

Un flux magnétique, résultant du champ magnétique de commande, est généré dans le tore 3. Le flux magnétique est symbolisé par les lignes de champ 12.

Lorsque la navette 6 se trouve dans la deuxième position extrémale et que la tige 7 se trouve dans la position étendue, l'organe de freinage de parc 0 se trouve dans l'état bloqué. Une fois la navette 6 déplacée, il n'est plus nécessaire d'alimenter l'organe de freinage de parc 0 car l'aimant permanent 4 va maintenir un champ magnétique immobilisant la navette 6.

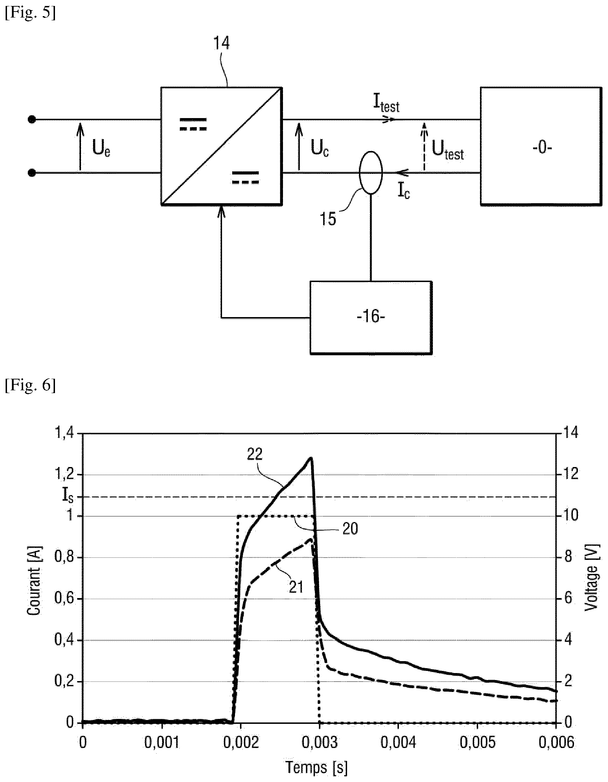

En référence à la figure 5, l'organe de freinage de parc 0 est relié à un composant d'alimentation 14, en l'occurrence à un convertisseur DC/DC qui génère la tension de commande (+/-) U_{c} à partir d'une tension d'entrée Uₑ. La tension d'entrée Uₑ est ici plus élevée que la tension de commande U_{c} et est par exemple égale à 20V, 50V, 270V ou plus encore.

Le courant de commande I_{c} est mesuré par un capteur de courant 15.

Un composant de traitement 16 acquiert les mesures du courant de commande I_{c}. Le composant de traitement 16 comprend par exemple un microcontrôleur, un processeur, un circuit logique programmable de type ASIC (de l'anglais « *Application Specific Integrated Circuit* ») ou de type FPGA (de l'anglais « Field-Programmable Gate Array »), etc. Le composant de traitement 16 utilise les mesures du courant de commande I_{c} pour ajuster la tension de commande U_{c}. Le composant de traitement 16 utilise aussi les mesures du courant de commande I_{c} pour surveiller l'organe de freinage de parc 0, par exemple en détectant un éventuel court-circuit.

On décrit maintenant le procédé de détection selon l'invention. Le procédé de détection vise à détecter l'état bloqué ou déverrouillé « réel » de l'organe de freinage de parc 0.

Le composant de traitement 16 pilote le composant d'alimentation 14 pour que celui-ci génère une tension de test Uₜₑₛₜ aux bornes de la bobine 2 et donc un courant de test Iₜₑₛₜ circulant dans la bobine 2. L'état bloqué ou déverrouillé de l'organe de freinage de parc 0 est détecté à partir d'une analyse de mesures du courant de test Iₜₑₛₜ. La tension de test Uₜₑₛₜ et le courant de test Iₜₑₛₜ sont définis de sorte que la distinction entre la première position extrémale et la deuxième position extrémale soit la plus fiable possible.

La tension de test Uₜₑₛₜ doit avoir une amplitude assez élevée pour que les perturbations dans le courant de test Iₜₑₛₜ soient négligeables et pour que celui-ci puisse être mesuré de manière précise.

La tension de test Uₜₑₛₜ doit avoir une amplitude suffisamment faible pour que, lorsque la tension de test Uₜₑₛₜ est appliquée, un champ magnétique de test généré par le courant de test Iₜₑₛₜ ne déplace pas la navette 6. Ainsi, lorsque la tension de test Uₜₑₛₜ est appliquée, la navette 6 reste immobile ou, éventuellement, subit un mouvement d'amplitude très réduite et insuffisant pour la faire passer d'une position extrémale à l'autre. La tension de test Uₜₑₛₜ est donc inférieure à un seuil de tension prédéterminé. Ici, la tension de test Uₜₑₛₜ est inférieure au seuil de déclenchement de l'électro-aimant linéaire bistable 1, avec une marge de quelques volts pour tenir compte des variations de tolérance. Par exemple, en considérant un électro-aimant linéaire bistable 1 dont le seuil de déclenchement est de 14V, l'amplitude de la tension de test Uₜₑₛₜ peut être égale à 10V.

Le composant de traitement 16 acquiert ensuite des mesures du courant de test Iₜₑₛₜ produites par le capteur de courant 15.

Le composant de traitement 16 analyse alors les mesures du courant de test Iₜₑₛₜ et détecte l'état bloqué ou déverrouillé de l'organe de freinage de parc 0 à partir de cette analyse. Le composant de traitement 16 transmet alors cette information vers les organes de contrôle « supérieurs » (niveau système) du système de freinage électrique et/ou de l'aéronef.

En référence à la figure 6, la tension de test Uₜₑₛₜ (courbe 20) comprend par exemple un échelon de tension de 10V. L'analyse des mesures du courant de test Iₜₑₛₜ consiste à comparer une amplitude du courant de test Iₜₑₛₜ avec un premier seuil de courant prédéterminé Iₛ : lorsque l'amplitude maximale du courant de test Iₜₑₛₜ est inférieure ou égale à Iₛ (courbe 21), l'organe de freinage de parc 0 se trouve dans l'état déverrouillé, et lorsque l'amplitude maximale du courant de test Iₜₑₛₜ est supérieure à Iₛ (courbe 22), l'organe de freinage de parc 0 se trouve dans l'état bloqué.

Plutôt que l'amplitude maximale, on pourrait bien sûr comparer une autre amplitude caractéristique du courant de test Iₜₑₛₜ, par exemple une amplitude moyenne ou une amplitude à un temps T donné.

La tension de test Uₜₑₛₜ n'est pas nécessairement un échelon de tension mais pourrait être un sinus d'amplitude Aₜₑₛₜ et de fréquence Fₜₑₛₜ. Le courant de test Iₜₑₛₜ est alors un sinus dont l'amplitude et le déphasage sont spécifiques à chaque position extrémale de la navette 6.

La tension de test Uₜₑₛₜ pourrait être plus complexe et comprendre un signal carré, un signal triangulaire, un dirac, un mix de ces signaux, etc.

L'analyse du courant de test Iₜₑₛₜ peut être une analyse fréquentielle. Dans ce cas, on compare l'amplitude d'au moins une harmonique du courant de test Iₜₑₛₜ avec un deuxième seuil de courant prédéterminé. Cette comparaison permet de déterminer la position extrémale dans laquelle se trouve la navette 6.

Le courant de test Iₜₑₛₜ peut être analysé à la fois de manière temporelle et fréquentielle pour rendre le résultat plus robuste.

Les différences qui existent entre le courant de test Iₜₑₛₜ lorsque la navette 6 se trouve dans la première position extrémale et lorsque la navette 6 se trouve dans la deuxième position extrémale résultent du fait que le champ magnétique de test n'est pas identique dans les deux cas, du fait d'une asymétrie magnétique qui existe entre un premier circuit magnétique correspondant à la tige 7 en position rétractée et un deuxième circuit magnétique correspondant à la tige 7 en position étendue.

L'asymétrie magnétique est due à l'influence de l'aimant permanent 4 qui s'oppose dans un cas au champ magnétique de test et qui l'intensifie dans l'autre cas.

L'asymétrie magnétique est due aussi à l'asymétrie de la tige 7. En effet, même si elles ne sont pas visibles sur les figures, des lignes de champ circulent sur la tête 23 qui se trouve à une extrémité de la tige 7, l'autre extrémité en étant dépourvue.

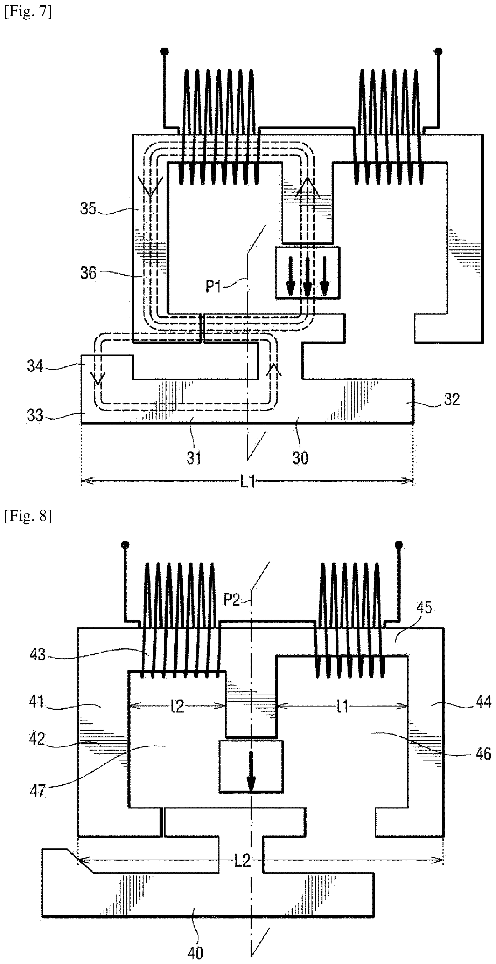

L'inductance vue depuis les bornes de l'organe de freinage de parc 0 n'est donc pas identique dans les deux positions extrémales de la navette 6, et donc le courant de test Iₜₑₛₜ n'a pas la même forme et la même amplitude dans les deux positions extrémales pour une même tension de test Uₜₑₛₜ. Avantageusement, en référence à la figure 7, pour accentuer les différences entre le courant de test Iₜₑₛₜ dans les deux positions, on accentue une asymétrie magnétique entre un premier circuit magnétique correspondant à la tige 30 en position rétractée et un deuxième circuit magnétique correspondant à la tige 30 en position étendue. On confère à cet effet à la tige 30 une première forme asymétrique par rapport à un premier plan médian P1 de la tige 30 perpendiculaire à une direction de coulissement de la tige 30. Par « plan médian », on entend ici un plan qui passe par un milieu de la tige 30 selon sa longueur L1.

On voit ainsi sur la figure 7 que la tige 30 présente une portion courante 31 qui s'étend entre une première extrémité 32 de la tige 30 et une deuxième extrémité 33 de la tige 30, et une portion extrémale 34 située au niveau de la deuxième extrémité 33 qui s'étend perpendiculairement à la portion courante 31. La portion extrémale 34 s'étend à proximité immédiate du tore 35, de manière à former un chemin magnétique pour les lignes de champ 36 lorsque la tige 30 se trouve en position étendue comme c'est le cas sur la figure 7.

Avantageusement à nouveau, en référence à la figure 8, pour accentuer les différences entre le courant de test Iₜₑₛₜ dans les deux positions, on accentue une asymétrie magnétique entre un premier circuit magnétique correspondant à la tige 40 en position rétractée et un deuxième circuit magnétique correspondant à la tige 40 en position étendue. On confère à cet effet au tore 41 une deuxième forme asymétrique par rapport à un deuxième plan médian P2 du tore 41 perpendiculaire à une direction de coulissement de la tige 40. Par « plan médian », on entend ici un plan qui passe par un milieu du tore 41 selon sa longueur L2.

On voit ainsi sur la figure 8 que les épaisseurs des branches 42 et 43 du tore 41 sont supérieures aux épaisseurs des branches 44 et 45. On voit aussi que la largeur l1 de la cavité interne 46 est supérieure à la largeur l2 de la cavité interne 47.

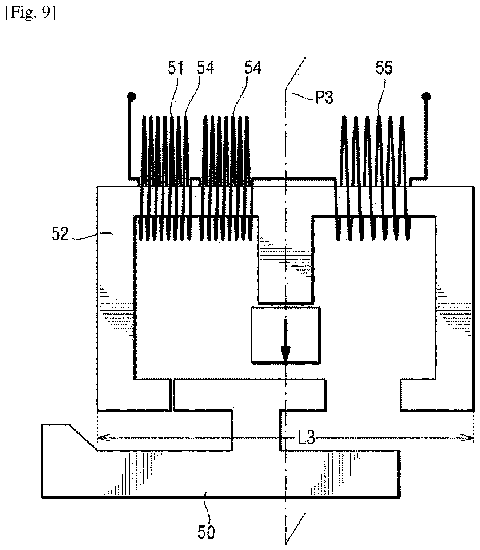

Avantageusement à nouveau, en référence à la figure 9, pour accentuer les différences entre le courant de test Iₜₑₛₜ dans les deux positions, on accentue une asymétrie magnétique entre un premier circuit magnétique correspondant à la tige 50 en position rétractée et un deuxième circuit magnétique correspondant à la tige 50 en position étendue. On enroule à cet effet la bobine 51 sur le tore ferromagnétique 52 selon un agencement asymétrique par rapport à un troisième plan médian P3 du tore 52 perpendiculaire à une direction de coulissement de la tige 50. Par « plan médian », on entend ici un plan qui passe par un milieu du tore 52 selon sa longueur L3.

On voit ainsi sur la figure 9 que la bobine 51 comporte deux enroulements 54 situés d'un côté du troisième plan médian P3 et un enroulement 55 situé d'un autre côté du troisième plan médian P3.

On note aussi qu'une forme asymétrique pourrait être conférée à l'aimant ou à la navette.

Il serait bien sûr possible d'appliquer plusieurs de ces agencements asymétriques à un même électro-aimant linéaire bistable (tige, bobine, tore, aimant, navette).

On note par ailleurs qu'il serait possible d'augmenter l'effet de l'asymétrie magnétique en augmentant la taille de l'aimant.

L'invention qui vient d'être présentée permet donc de déterminer l'état réel d'un organe de freinage de parc existant sans le modifier « matériellement ». La détection est réalisée grâce à une modification uniquement du logiciel du composant de traitement, ce qui est particulièrement avantageux en matière de fiabilité, de masse, de volume et de coût.

On note que le composant d'alimentation 14, le capteur de courant 15 et le composant de traitement 16 sont ici intégrés dans un carter de l'actionneur électromécanique de freinage. Cette configuration correspond à une architecture distribuée du système de freinage électrique, dans laquelle l'électronique de commande est positionnée au plus près des actionneurs. Bien sûr, l'invention s'applique de la même manière dans le cas d'une architecture « centralisée » dans laquelle le composant d'alimentation 14, le capteur de courant 15 et le composant de traitement 16 sont situés dans un calculateur positionné dans le fuselage de l'aéronef.

L'invention est particulièrement avantageuse dans le cas de l'architecture distribuée. L'électronique est en effet intégrée dans le carter de l'actionneur électromécanique de freinage et est donc positionnée sur le frein et donc dans un environnement contraint et sévère. L'ajout de composants matériels (*hardware*) dans un tel environnement est particulièrement complexe et tend à réduire la fiabilité de l'actionneur électromécanique de freinage. La mise en œuvre de la détection de l'état réel de l'organe de freinage de parc, sans composant supplémentaire, est donc très intéressante dans cette architecture.

Bien entendu, l'invention n'est pas limitée au mode de réalisation décrit mais englobe toute variante entrant dans le champ de l'invention telle que définie par les revendications.

L'invention est ici mise en œuvre dans un organe de freinage de parc d'un actionneur électromécanique de freinage d'un système de freinage électrique. Cependant, elle pourrait aussi être mise en œuvre dans un système de freinage hydraulique.

Dans un système de freinage hydraulique, chaque actionneur hydraulique peut être relié à une source de pression via un circuit hydraulique de freinage normal et un circuit hydraulique de parc. Le circuit hydraulique de parc comporte classiquement une vanne de parc ayant un port de sortie adapté à être sélectivement connecté soit à la source de pression, soit à un circuit de retour sous basse pression relativement à ladite haute pression.

La vanne de parc peut être manœuvrée par un électro-aimant linéaire bistable comportant une tige coulissant entre une position étendue et une position rétractée. Dans ce cas, l'« organe de freinage de parc » comprend à la fois la vanne de parc et l'électro-aimant linéaire bistable. L'état de la vanne de parc est détecté grâce au procédé de détection selon l'invention.

## Revendications

1. Procédé de détection d'un état bloqué ou déverrouillé d'un organe de freinage de parc (0) d'un frein d'une roue d'aéronef, l'organe de freinage de parc comportant un électro-aimant linéaire bistable (1) qui comprend un tore ferromagnétique (3 ; 35 ; 41 ; 52), une bobine (2 ; 51), un aimant permanent (4) et une navette (6) reliée à une tige (7 ; 30 ; 40 ; 50), la navette étant montée coulissante dans le tore ferromagnétique entre deux positions extrémales situées de part et d'autre de l'aimant permanent et correspondant à une position étendue et à une position rétractée de la tige, l'organe de freinage de parc étant relié à un composant d'alimentation (14) agencé pour générer une tension de commande (U_{c}) aux bornes de la bobine de sorte qu'un courant de commande (I_{c}) circule dans la bobine et génère un champ magnétique de commande qui déplace la navette (6) entre les deux positions extrémales, et à un capteur de courant (15) agencé pour mesurer le courant de commande, le procédé de détection comprenant les étapes de :
- piloter le composant d'alimentation (14) pour générer une tension de test (Uₜₑₛₜ) aux bornes de la bobine et donc un courant de test (Iₜₑₛₜ) circulant dans la bobine, la tension de test ayant une amplitude inférieure à un seuil de tension prédéterminé de sorte qu'un champ magnétique de test généré par le courant de test ne déplace pas la navette ;
- acquérir des mesures du courant de test produites par le capteur de courant (15) ;
- analyser les mesures du courant de test et détecter l'état bloqué ou déverrouillé de l'organe de freinage de parc à partir de cette analyse.

2. Procédé de détection selon la revendication 1, dans lequel la tension de test comprend un échelon de tension (20) et dans lequel l'analyse des mesures du courant de test comprend l'étape de comparer une amplitude du courant de test avec un premier seuil de courant prédéterminé (Iₛ).

3. Procédé de détection selon la revendication 1, dans lequel l'analyse des mesures du courant de test est une analyse fréquentielle.

4. Procédé de détection selon la revendication 3, dans lequel l'analyse fréquentielle comprend l'étape de comparer une amplitude d'au moins une harmonique du courant de test avec un deuxième seuil de courant prédéterminé.

5. Système de freinage de parc comportant un organe de freinage de parc (0), un composant d'alimentation (14), un capteur de courant (15) et un composant de traitement (16), l'organe de freinage de parc comprenant un électro-aimant linéaire bistable (1) qui comporte un tore ferromagnétique (3), une bobine (2), un aimant permanent (4) et une navette (6) reliée à une tige (7), la navette étant montée coulissante dans le tore ferromagnétique entre deux positions extrémales situées de part et d'autre de l'aimant permanent et correspondant à une position étendue et à une position rétractée de la tige, l'organe de freinage de parc étant relié au composant d'alimentation (14) qui est agencé pour générer une tension de commande (U_{c}) aux bornes de la bobine de sorte qu'un courant de commande (I_{c}) circule dans la bobine et génère un champ magnétique de commande qui déplace la navette entre les deux positions extrémales, et au capteur de courant (15) qui est agencé pour mesurer le courant de commande, le procédé de détection selon l'une des revendications précédentes étant mis en œuvre dans le composant de traitement (16).

6. Système de freinage de parc selon la revendication 5, dans lequel la tige (30) présente une première forme asymétrique par rapport à un premier plan médian (P1) de la tige, qui est orthogonal à une direction de coulissement de la tige, de manière à accentuer une asymétrie magnétique entre un premier circuit magnétique correspondant à la tige (30) en position rétractée et un deuxième circuit magnétique correspondant à la tige (30) en position étendue.

7. Système de freinage de parc selon la revendication 5, dans lequel le tore ferromagnétique (41) présente une deuxième forme asymétrique par rapport à un deuxième plan médian (P2) du tore ferromagnétique, qui est orthogonal à une direction de coulissement de la tige (40), de manière à accentuer une asymétrie magnétique entre un premier circuit magnétique correspondant à la tige (40) en position rétractée et un deuxième circuit magnétique correspondant à la tige (40) en position étendue.

8. Système de freinage de parc selon la revendication 5, dans lequel la bobine (51) est enroulée sur le tore ferromagnétique (52) selon un agencement asymétrique par rapport à un troisième plan médian (P3) du tore ferromagnétique, qui est orthogonal à une direction de coulissement de la tige, de manière à accentuer une asymétrie magnétique entre un premier circuit magnétique correspondant à la tige (50) en position rétractée et un deuxième circuit magnétique correspondant à la tige (50) en position étendue.

9. Actionneur électromécanique comprenant un carter et un système de freinage de parc selon l'une des revendications 5 à 8, le système de freinage de parc étant intégré dans le carter.

## Patentansprüche

1. Verfahren zum Erfassen eines blockierten oder entriegelten Zustandes eines Parkbremsorgans (0) einer Bremse eines Luftfahrzeugrades, wobei das Parkbremsorgan einen bistabilen linearen Elektromagneten (1) umfasst, der einen ferromagnetischen Kern (3; 35; 41; 52), eine Spule (2; 51), einen Dauermagneten (4) und ein mit einer Stange (7; 30; 40; 50) verbundenes Pendelelement (6) umfasst, wobei das Pendelelement in dem ferromagnetischen Kern zwischen zwei Endpositionen verschiebbar gelagert ist, die sich zu beiden Seiten des Dauermagneten befinden und einer ausgefahrenen Position und einer eingefahrenen Position der Stange entsprechen, wobei das Parkbremsorgan mit einer Versorgungskomponente (14) verbunden ist, die ausgebildet ist, um eine Steuerspannung (U_{c}) an den Klemmen der Spule derart zu erzeugen, dass ein Steuerstrom (I_{c}) in der Spule fließt und ein Steuermagnetfeld erzeugt, welches das Pendelelement (6) zwischen den beiden Endpositionen verschiebt, und mit einem Stromsensor (15), der ausgebildet ist, um den Steuerstrom zu messen, wobei das Verfahren zum Erfassen die Schritte umfasst:
- Steuern der Versorgungskomponente (14), um eine Testspannung (Uₜₑₛₜ) an den Klemmen der Spule und folglich einen in der Spule fließenden Teststrom (Iₜₑₛₜ) zu erzeugen, wobei die Testspannung eine Amplitude hat, die kleiner als ein vorbestimmter Spannungsschwellenwert ist, sodass ein durch den Teststrom erzeugtes Testmagnetfeld das Pendelelement nicht verschiebt;
- Erfassen von Messungen des Teststroms, die von dem Stromsensor (15) erzeugt werden;
- Analysieren der Messungen des Teststroms und Erfassen des blockierten oder entriegelten Zustandes des Parkbremsorgans anhand dieser Analyse.

2. Verfahren zum Erfassen nach Anspruch 1, bei dem die Testspannung einen Spannungssprung (20) umfasst und bei dem die Analyse der Messungen des Teststroms den Schritt des Vergleichens einer Amplitude des Teststroms mit einem ersten vorbestimmten Stromschwellenwert (Iₛ) umfasst.

3. Verfahren zum Erfassen nach Anspruch 1, bei dem die Analyse der Messungen des Teststroms eine Frequenzanalyse ist.

4. Verfahren zum Erfassen nach Anspruch 3, bei dem die Frequenzanalyse den Schritt des Vergleichens einer Amplitude mindestens einer Harmonischen des Teststroms mit einem vorbestimmten zweiten Schwellenwert umfasst.

5. Parkbremssystem, umfassend ein Parkbremsorgan (0), eine Versorgungskomponente (14), einen Stromsensor (15) und eine Verarbeitungskomponente (16), wobei das Parkbremsorgan einen bistabilen linearen Elektromagneten (1) umfasst, der einen ferromagnetischen Kern (3), eine Spule (2), einen Dauermagneten (4) und ein mit einer Stange (7) verbundenes Pendelelement (6) umfasst, wobei das Pendelelement in dem ferromagnetischen Kern verschiebbar zwischen zwei Endpositionen gelagert ist, die sich zu beiden Seiten des Dauermagneten befinden und einer ausgefahrenen Position und einer eingefahrenen Position der Stange entsprechen, wobei das Parkbremsorgan mit der Versorgungskomponente (14) verbunden ist, die ausgebildet ist, um eine Steuerspannung (U_{c}) an den Klemmen der Spule zu erzeugen, sodass ein Steuerstrom (I_{c}) in der Spule fließt und ein Steuermagnetfeld erzeugt, welches das Pendelelement zwischen den beiden Endpositionen verschiebt, und mit dem Stromsensor (15), der ausgebildet ist, um den Steuerstrom zu messen, wobei das Verfahren zum Erfassen nach einem der vorhergehenden Ansprüche in der Verarbeitungskomponente (16) durchgeführt wird.

6. Parkbremssystem nach Anspruch 5, bei dem die Stange (30) eine erste asymmetrische Form in Bezug auf eine erste Mittelebene (P1) der Stange aufweist, die orthogonal zu einer Verschiebungsrichtung der Stange ist, um eine magnetische Asymmetrie zwischen einem ersten Magnetkreis, der der Stange (30) in der eingefahrenen Position entspricht, und einem zweiten Magnetkreis, der der Stange (30) in der ausgefahrenen Position entspricht, zu betonen.

7. Parkbremssystem nach Anspruch 5, bei dem der ferromagnetische Kern (41) eine zweite asymmetrische Form in Bezug auf eine zweite Mittelebene (P2) des ferromagnetischen Kerns aufweist, die orthogonal zu einer Verschiebungsrichtung der Stange (40) ist, um eine magnetische Asymmetrie zwischen einem ersten Magnetkreis, der der Stange (40) in der eingefahrenen Position entspricht, und einem zweiten Magnetkreis, der der Stange (40) in der ausgefahrenen Position entspricht, zu betonen.

8. Parkbremssystem nach Anspruch 5, bei dem die Spule (51) auf den ferromagnetischen Kern (52) gemäß einer asymmetrischen Anordnung in Bezug auf eine dritte Mittelebene (P3) des ferromagnetischen Kerns gewickelt ist, die orthogonal zu einer Verschiebungsrichtung der Stange ist, um eine magnetische Asymmetrie zwischen einem ersten magnetischen Kreis, der der Stange (50) in der eingefahrenen Position entspricht, und einem zweiten magnetischen Kreis, der der Stange (50) in der ausgefahrenen Position entspricht, zu betonen.

9. Elektromechanischer Aktor, umfassend ein Gehäuse und ein Parkbremssystem nach einem der Ansprüche 5 bis 8, wobei das Parkbremssystem in das Gehäuse integriert ist.

## Claims

1. A detection method for detecting the blocked or unlocked state of a parking brake member (0) of a brake of an aircraft wheel, the parking brake member comprising a bistable linear electromagnet (1) comprising a ferromagnetic torus (3; 35; 41; 52), a coil (2; 51), a permanent magnet (4), and a shuttle (6) connected to a rod (7; 30; 40; 50), the shuttle being mounted in the ferromagnetic torus to slide between two extreme positions situated on opposite sides of the permanent magnet and corresponding respectively to an extended position and to a retracted position for the rod, the parking brake member being connected both to a power supply component (14) arranged to generate a control voltage (U_{c}) across the terminals of the coil so that a control current (I_{c}) flows in the coil and generates a control magnetic field that moves the shuttle (6) between the two extreme positions, and also to a current sensor (15) arranged to measure the control current, the detection method comprising the steps of:
• controlling the power supply component (14) to generate a test voltage (Uₜₑₛₜ) across the terminals of the coil and thus generate a test current (Iₜₑₛₜ) flowing in the coil, the test voltage having an amplitude less than a predetermined voltage threshold so that a test magnetic field generated by the test current does not move the shuttle;
• acquiring measurements of the test current as produced by the current sensor (15); and
• analyzing the measurements of the test current and detecting the blocked or unlocked state of the parking brake member on the basis of this analysis.

2. A detection method according to claim 1, wherein the test voltage comprises a voltage level (20) and wherein the analysis of the measurements of the test current comprises the step of comparing an amplitude of the test current with a first predetermined current threshold (Iₛ).

3. A detection method according to claim 1, wherein the analysis of the measurements of the test current is frequency analysis.

4. A detection method according to claim 3, wherein the frequency analysis comprises the step of comparing the amplitude of at least one harmonic of the test current with a second predetermined current threshold.

5. A parking brake system comprising a parking brake member (0), a power supply component (14), a current sensor (15), and a processor component (16), the parking brake member comprising a bistable linear electromagnet (1) comprising a ferromagnetic torus (3), a coil (2), a permanent magnet (4), and a shuttle (6) connected to a rod (7), the shuttle being mounted in the ferromagnetic torus to slide between two extreme positions situated on opposite sides of the permanent magnet and corresponding respectively to an extended position and to a retracted position for the rod, the parking brake member being connected both to the power supply component (14), which is arranged to generate a control voltage (U_{c}) across the terminals of the coil so that a control current (I_{c}) flows in the coil and generates a control magnetic field that moves the shuttle between the two extreme positions, and also to the current sensor (15), which is arranged to measure the control current, the detection method according to any preceding claim being performed in the processor component (16).

6. A parking brake system according to claim 5, wherein the rod (30) presents a first shape that is asymmetric about a first midplane (P1) orthogonal to the sliding direction of the rod, in such a manner as to accentuate magnetic asymmetry between a first magnetic circuit corresponding to the rod (30) in the retracted position and a second magnetic circuit corresponding to the rod (30) in the extended position, which first midplane is a midplane of the rod.

7. A parking brake system according to claim 5, wherein the ferromagnetic torus (41) presents a second shape that is asymmetric about a second midplane (P2) orthogonal to the sliding direction of the rod (40), in such a manner as to accentuate magnetic asymmetry between a first magnetic circuit corresponding to the rod (40) in the retracted position and a second magnetic circuit corresponding to the rod (40) in the extended position, which second midplane is a midplane of the ferromagnetic torus.

8. A parking brake system according to claim 5, wherein the coil (51) is wound on the ferromagnetic torus (52) in an arrangement that is asymmetric about a third midplane (P3) orthogonal to the sliding direction of the rod, in such a manner as to accentuate magnetic asymmetry between a first magnetic circuit corresponding to the rod (50) in the retracted position and a second magnetic circuit corresponding to the rod (50) in the extended position, which third midplane is a midplane of the ferromagnetic torus.

9. An electromechanical actuator comprising a casing and a parking brake system according to any one of claims 5 to 8, the parking brake system being incorporated in the casing.
